# FASCICULE DE BREVET EUROPEEN

(11) **EP 2 836 381 B1**
(45) Date de publication et mention de la délivrance du brevet: **31.01.2018**
(21) Numéro de dépôt: 13712770.0
(22) Date de dépôt: 26.03.2013
(51) Int. Cl.: B60H 1/00, B60H 1/32

(54) **DISPOSITIF DE CONDITIONNEMENT THERMIQUE D'UN HABITACLE DE VÉHICULE.**
VORRICHTUNG ZUR WÄRMEREGELUNG EINES INSASSENRAUMS EINES FAHRZEUGES
DEVICE FOR THE THERMAL CONDITIONING OF A VEHICLE PASSENGER COMPARTMENT

(30) Priorité: 11.04.2012 FR 1253311
(43) Date de publication de la demande: 18.02.2015
(73) Titulaire: Valeo Systemes Thermiques, 78320 Le Mesnil Saint Denis (FR)
(72) Inventeur: PIERRES, Philippe, F-78990 Elancourt (FR); GRELLIER, Michel, F-94260 Fresnes (FR); GUIGOU, Pascal, F-92260 Fontenay Aux Roses (FR)
(74) Mandataire: Metz, Gaëlle
(86) Numéro de dépôt international: PCT/EP2013/056451
(87) Numéro de publication internationale: WO 2013/152949

(56) Documents cités:
- DE-A1- 10 033 732
- DE-A1- 19 843 008
- US-A1- 2005 170 769
- US-A1- 2008 108 293
- US-B1- 6 655 163

## Description

Le domaine technique de la présente invention est celui des installations de ventilation agencées dans un véhicule automobile et destinées à ventiler, chauffer et/ou refroidir un habitacle d'un tel véhicule. L'invention s'applique plus particulièrement à un dispositif de conditionnement thermique dédié à une zone arrière du véhicule.

Il est connu d'équiper un véhicule automobile avec un dispositif de conditionnement thermique destiné à refroidir une zone arrière du véhicule. Un tel dispositif de conditionnement thermique est agencé pour prélever un flux d'air dans l'habitacle du véhicule et le refroidir, par échange thermique, avec un échangeur de chaleur, en particulier un évaporateur, agencé dans un canal de circulation d'air. Dans le cas où la température du flux d'air, ainsi refroidi, est trop basse en sortie du dispositif de conditionnement thermique, il est connu d'agencer, dans le dispositif de conditionnement thermique, un conduit de circulation d'air contournant l'échangeur de chaleur, de manière à opérer un mélange entre le flux d'air refroidi et un flux d'air à température de l'habitacle. En mélangeant le flux d'air refroidi et le flux d'air à température de l'habitacle, on élève la température du flux d'air destiné à être diffusé dans l'habitacle, ce qui permet de limiter la sensation de froid pour les passagers, tout en conditionnant thermiquement la zone arrière du véhicule. On parle alors d'adoucissement du flux d'air.

Les dimensions extérieures de l'échangeur de chaleur, en particulier de l'évaporateur, imposent un canal de circulation d'air de grande section. Comme l'encombrement du dispositif de conditionnement thermique est limité, la grande section du canal de circulation d'air, contenant l'échangeur de chaleur, induit une réduction de la section du conduit de circulation d'air contournant l'échangeur de chaleur. Un tel déséquilibre dimensionnel perturbe la circulation du flux d'air dans le conduit de circulation d'air, de sorte que le flux d'air traverse préférentiellement le canal de circulation d'air et ne passe pas, ou peu, dans le conduit de circulation. Une telle disproportion de circulation d'air dans le canal de circulation d'air et dans le conduit de circulation d'air dégrade la fonction d'adoucissement du flux d'air.

Une telle situation peut être corrigée en installant une paroi interne venant réduire la section du canal de circulation d'air, dans lequel est agencé l'échangeur de chaleur. Ainsi, une telle réduction de section du canal de circulation d'air permet d'augmenter le débit d'air dans le conduit de circulation d'air, contournant l'échangeur de chaleur. Néanmoins, une telle solution n'est cependant pas satisfaisante car elle génère une perte de charge permanente sur le flux d'air. De plus, une telle perte de charge sur le flux d'air est trop importante et se traduit, corrélativement, par une augmentation des nuisances sonores et/ou une augmentation de la puissance électrique consommée par un groupe moto-ventilateur mettant en mouvement le flux d'air dans le dispositif de conditionnement thermique. Un dispositif de conditionnement thermique connu est divulgué par le document US 6 655 163 B1, qui est considéré comme l'art antérieur le plus proche. Le but de la présente invention est donc de résoudre les inconvénients décrits ci-dessus. A cet effet, la présente invention a donc pour objet un dispositif de conditionnement thermique suivant les caractéristiques de la revendication 1, et un système de conditionnement thermique d'un habitacle de véhicule automobile suivant la revendication 10. La présente invention propose donc principalement d'utiliser un même composant afin de gérer la circulation du flux d'air dans le conduit de circulation d'air contournant l'échangeur de chaleur, et de générer une perte de charge sur le flux d'air circulant dans le canal de circulation d'air, uniquement quand il est nécessaire de favoriser la circulation du flux d'air dans le conduit de circulation d'air contournant l'échangeur de chaleur, c'est-à-dire lorsque la fonction d'adoucissement du flux d'air est requise.

Le dispositif de conditionnement thermique selon la présente invention permet un post traitement du flux d'air, diffusé dans l'habitacle du véhicule par une l'installation de chauffage, ventilation, et/ou climatisation principale, de manière à garantir le confort aux places arrière du véhicule, notamment un véhicule de grand volume de type "monospace" et/ou disposant de plus de deux rangées de sièges.

Le principe du dispositif de conditionnement thermique selon la présente invention est de permettre un réglage de la température du flux d'air diffusé dans la zone dédiée du véhicule, en particulier une zone arrière, par l'intermédiaire du réglage du mélange entre le flux d'air à température de l'habitacle, ou flux d'air ambiant, prélevé dans l'habitacle du véhicule et le flux d'air traité au travers de l'échangeur de chaleur agencé dans le dispositif de conditionnement thermique selon la présente invention.

Le mélange du flux d'air traité au travers de l'échangeur de chaleur agencé dans le dispositif de conditionnement thermique et du flux d'air à température de l'habitacle est réalisé par l'intermédiaire du moyen de contrôle permettant de définir des débits relatifs.

Selon un premier exemple de réalisation, le moyen de contrôle est un volet tambour. Alternativement, le moyen de contrôle peut être formé par un autre type de volet, par exemple un volet drapeau ou un volet papillon.

Le moyen de contrôle est agencé pour générer une perte de charge dans le canal de circulation d'air, ce qui permet de réduire le débit d'air dans le canal de circulation d'air et d'augmenter le débit d'air dans le conduit de circulation d'air. Une telle perte de charge est cependant réversible, de manière à être réduite lorsqu'il est nécessaire que l'intégralité du flux d'air provenant du groupe moto-ventilateur passe par le canal de circulation d'air pour rejoindre au moins une sortie d'air du boîtier de conditionnement thermique.

Selon une première caractéristique de l'invention, le moyen de contrôle est installé dans le boîtier de conditionnement thermique en aval et/ou en amont de l'échangeur de chaleur, selon le sens de déplacement du flux d'air. Le canal de circulation d'air est ainsi pourvu d'un orifice d'entrée et d'un orifice de sortie, alors que le conduit de circulation d'air est pourvu d'une bouche d'entrée et d'une bouche de sortie.

Dans la première position, le moyen de contrôle ferme ainsi la bouche d'entrée et/ou la bouche de sortie du conduit de circulation d'air. Dans une position différente de la première position, le moyen de contrôle ouvre au moins partiellement la bouche d'entrée et/ou la bouche de sortie, tout en s'étendant partiellement au niveau de l'orifice d'entrée et/ou de l'orifice de sortie du canal de circulation d'air. Suivant l'invention, la première position du moyen de contrôle correspond à une première position extrême, le moyen de contrôle étant agencé pour prendre une deuxième position extrême dans laquelle il ouvre intégralement le conduit de circulation d'air, notamment la bouche d'entrée et/ou la bouche de sortie, tout en fermant partiellement le canal de circulation d'air. On entend par "position extrême du moyen de contrôle" une position dans laquelle le moyen de contrôle est dans une position finale et vient en butée contre une paroi du boîtier de conditionnement thermique.

On notera que le dispositif de conditionnement thermique selon la présente invention est, avantageusement, agencé pour traiter exclusivement un flux d'air recyclé, c'est-à-dire un flux d'air prélevé dans l'habitacle et diffusé dans l'habitacle du véhicule.

Selon un premier exemple de réalisation, le moyen de contrôle est un volet tambour. Alternativement, le moyen de contrôle est un volet drapeau.

De manière avantageuse, le boîtier de conditionnement thermique peut comprendre une paroi interne séparant le canal de circulation d'air du conduit de circulation d'air. Avantageusement, le moyen de contrôle est agencé dans le boîtier de conditionnement thermique de manière à se déplacer le long d'une extrémité libre de la paroi interne.

Alternativement, le moyen de contrôle est agencé dans le boîtier de conditionnement thermique de telle sorte qu'un axe de rotation du moyen de contrôle est positionné à l'extrémité libre de la paroi interne.

On notera que l'échangeur de chaleur est apte à permettre un échange de chaleur entre un fluide réfrigérant ou un fluide caloporteur et le flux d'air circulant dans le canal de circulation d'air. Selon un exemple de réalisation, l'échangeur de chaleur agencé dans le dispositif de conditionnement thermique est un évaporateur relié à une boucle de climatisation. Il servira alors de source froide pour réaliser le mélange avec un flux d'air issu d'une source chaude, constituée par le flux d'air à température de l'habitacle.

Alternativement, l'échangeur de chaleur agencé dans le dispositif de conditionnement thermique est un radiateur relié à une boucle de refroidissement d'un moteur du véhicule. Il servira donc de source chaude pour réaliser le mélange avec un flux d'air issu d'une source froide, constituée par le flux d'air à température de l'habitacle.

L'échangeur de chaleur en tant qu'évaporateur présente un intérêt particulier en raison des difficultés pour refroidir une zone arrière d'un véhicule, notamment un véhicule comportant plus de deux rangées de sièges. Le dispositif de conditionnement thermique selon la présente invention permet de résoudre une telle difficulté, en générant un refroidissement du flux d'air destiné à la zone arrière du véhicule.

Avantageusement, le boîtier de conditionnement thermique est agencé pour que le canal de circulation d'air et le conduit de circulation d'air débouchent dans une chambre de mélange des flux d'air en provenance du canal de circulation d'air et du conduit de circulation d'air. La chambre de mélange permet d'homogénéiser la température du flux d'air traité par le dispositif de conditionnement thermique, préalablement à la diffusion dans l'habitacle du véhicule.

Selon une autre caractéristique de l'invention, le boîtier de conditionnement thermique comprend au moins une sortie d'air ménagée au niveau de la chambre de mélange. Ainsi, l'habitacle du véhicule peut être alimenté par le flux d'air traité par le dispositif de conditionnement thermique à travers une telle sortie d'air.

Selon un exemple de réalisation, la circulation d'air entre la chambre de mélange et la sortie d'air est permanente, c'est-à-dire directe et non soumise à la dépendance d'un moyen de commande, notamment un volet, installé en amont de la chambre de mélange. Alternativement, des moyens de distribution peuvent être agencés dans le boîtier de conditionnement thermique pour commander l'ouverture et/ou la fermeture de la sortie d'air.

Selon une variante de réalisation, le dispositif de conditionnement thermique comprend un groupe moto-ventilateur mettant en mouvement le flux d'air dans le canal de circulation d'air et dans le conduit de circulation d'air.

Il est avantageux que l'échangeur de chaleur soit le seul et unique échangeur de chaleur installé dans le boîtier de conditionnement thermique. C'est notamment en cela que le dispositif de conditionnement thermique est dédié au traitement aérothermique d'une zone arrière du véhicule. En effet, la place allouée pour installer un tel dispositif de conditionnement thermique est particulièrement réduite.

L'invention couvre également un système de conditionnement thermique d'un habitacle de véhicule automobile, comprenant une installation de chauffage, ventilation et/ou climatisation et un dispositif de conditionnement thermique comprenant l'une quelconque des caractéristiques présentées ci-dessus, le dispositif de conditionnement thermique étant distinct, c'est-à-dire séparé, de l'installation de chauffage, ventilation et/ou climatisation.

De manière avantageuse, l'installation de chauffage, ventilation et/ou climatisation est configurée pour être installée dans une zone avant du véhicule, alors que le dispositif de conditionnement thermique selon la présente invention est agencé pour être installé dans une zone arrière du véhicule.

C'est notamment le cas lorsque l'installation de chauffage, ventilation et/ou climatisation est installée sous une planche de bord du véhicule, ou sous un plancher avant du véhicule, alors que le dispositif de conditionnement thermique est installé sous un plancher arrière du véhicule ou entre les sièges de la rangée avant du véhicule ou au dessus d'un passage de roue arrière du véhicule automobile.

Un premier avantage qui découle de la présente invention réside dans la possibilité de garantir une modification de la température du flux d'air en sortie du dispositif de conditionnement thermique au moyen du flux d'air circulant dans le conduit de circulation d'air.

Un autre avantage réside dans la possibilité de libérer totalement l'orifice de sortie du canal de circulation d'air quand le moyen de contrôle ferme le conduit de circulation d'air. On peut ainsi bénéficier de l'intégralité de la puissance thermique dissipée par l'échangeur de chaleur sans augmentation de la consommation électrique, grâce au fait que le canal de circulation d'air ne présente pas de réduction de section, puisque le moyen de contrôle ne s'étend pas dans de l'orifice de sortie quand il est dans la première position.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- la figure 1 est une vue en perspective d'un dispositif de conditionnement thermique selon la présente invention,
- la figure 2 est une vue en coupe de coté du dispositif de conditionnement thermique selon la présente invention dans lequel un moyen de contrôle est dans une première position, et
- la figure 3 est une vue en coupe de coté du dispositif de conditionnement thermique selon la présente invention analogue à la figure 2, dans lequel le moyen de contrôle est dans une deuxième position.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Selon la présente invention, les termes "aval", "amont", et "en parallèle" qualifient la position d'un composant par rapport à un autre, selon le sens de circulation du flux d'air dans un dispositif de conditionnement thermique selon la présente invention.

De plus, selon la présente invention, les termes "ouvert" et "fermé" qualifient l'état d'un composant permettant, respectivement, d'autoriser et/ou de bloquer un passage du flux d'air.

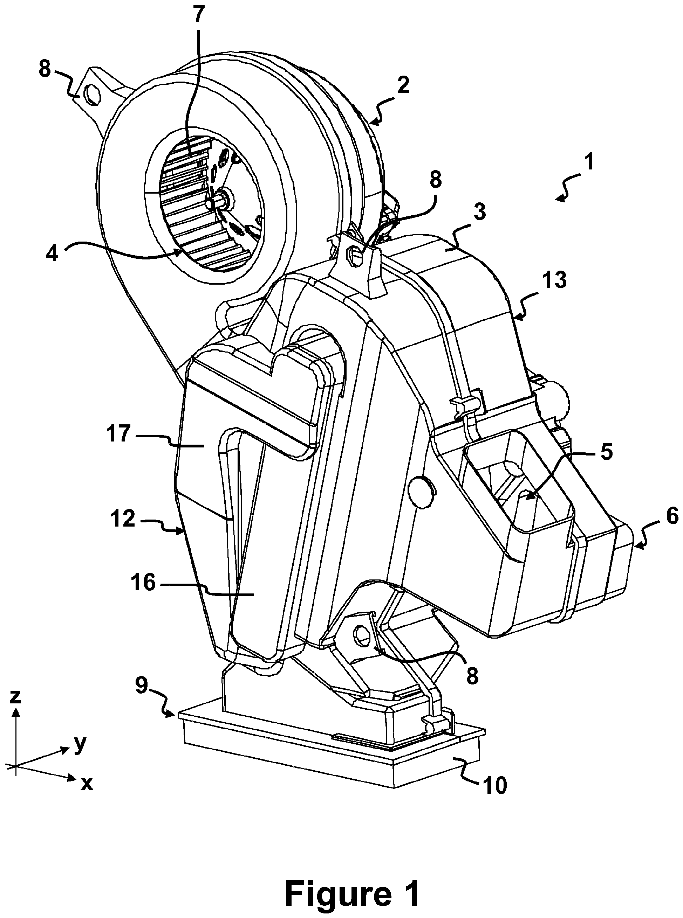

La figure 1 est une vue en perspective d'un dispositif de conditionnement thermique 1 selon la présente invention. Un tel dispositif de conditionnement thermique 1 canalise un flux d'air mis en mouvement par un groupe moto-ventilateur 2 intégré au dispositif de conditionnement thermique 1.

Le dispositif de conditionnement thermique 1 assure une pluralité de fonctions permettant de modifier les conditions aérothermiques d'un habitacle d'un véhicule, notamment d'un véhicule automobile.

Une première fonction du dispositif de conditionnement thermique 1 consiste en une ventilation d'une zone du véhicule, avantageusement une zone arrière du véhicule, la température d'un flux d'air entrant dans le dispositif de conditionnement thermique 1 étant identique à la température du flux d'air qui en sort.

Une seconde fonction du dispositif de conditionnement thermique 1 consiste en une ventilation combinée à un traitement thermique, par exemple un chauffage et/ou un refroidissement, du flux d'air circulant dans le dispositif de conditionnement thermique 1. Pour ce faire, le dispositif de conditionnement thermique 1 comprend au moins un échangeur de chaleur 20, non visible sur la figure 1, logé à l'intérieur d'un boîtier de conditionnement thermique 3 constitutif du dispositif de conditionnement thermique 1.

Le boîtier de conditionnement thermique 3 forme une enveloppe externe délimitant un volume interne du dispositif de conditionnement thermique 1 par rapport au milieu environnant le dispositif de conditionnement thermique 1. Le volume interne délimité par l'enveloppe externe du boîtier de conditionnement thermique 3 permet la circulation du flux d'air, sous l'action d'un groupe moto-ventilateur 2.

Le groupe moto-ventilateur 2 est formé par un moteur électrique, non représenté, entraînant en rotation une turbine 7. La turbine 7 est reçue dans une portion du boîtier de conditionnement thermique 3 prenant une forme de volute dans laquelle le flux d'air mis en mouvement par le groupe moto-ventilateur 2 est propulsé vers l'échangeur de chaleur 20.

Le boîtier de conditionnement thermique 3 comprend une entrée d'air 4 à travers laquelle le flux d'air entre dans le dispositif de conditionnement thermique 1.

Selon un aspect avantageux de la présente invention, le boîtier de conditionnement thermique 3 comprend une unique entrée d'air 4, agencée pour prélever le flux d'air dans l'habitacle du véhicule automobile. On considère donc que le dispositif de conditionnement thermique 1 fonctionne dans un mode dit "air recyclé".

Toutefois, alternativement, la présente invention couvre également le boîtier de conditionnement thermique 3 comprenant au moins deux entrées d'air, respectivement agencées pour prélever le flux d'air dans l'habitacle du véhicule automobile, ou "air recyclé", et/ou un flux d'air extérieur à l'habitacle du véhicule automobile, ou "air frais" ou "air extérieur".

Le boîtier de conditionnement thermique 3 comprend également au moins une sortie d'air par laquelle le flux d'air est diffusé dans l'habitacle du véhicule. Dans l'exemple de réalisation présenté à la figure 1, le dispositif de conditionnement thermique 1 comprend au moins une première sortie d'air 5 et une deuxième sortie d'air 6.

Selon l'exemple particulier de réalisation présenté sur les figures, la première sortie d'air 5 est agencée pour diriger le flux d'air selon une direction sensiblement verticale et la deuxième sortie d'air 6 est agencée pour diriger le flux d'air selon une direction sensiblement horizontale.

Telles que définies sur les figures, la direction verticale est une direction correspondant à une orientation du bas vers le haut du boîtier de conditionnement thermique 3 et la direction horizontale est une direction parallèle ou perpendiculaire à une orientation de l'avant vers l'arrière du boîtier de conditionnement thermique 3. Ainsi, la direction verticale correspond à la direction z et la direction horizontale correspond à la direction x ou à la direction y du repère orthonormé illustré sur les figures.

Bien entendu, la première sortie d'air 5, respectivement la deuxième sortie d'air 6, peut être agencée selon une autre direction, selon la configuration des zones du véhicule et l'implantation du dispositif de conditionnement thermique 1 dans le véhicule.

Le boîtier de conditionnement thermique 3 est pourvu d'une pluralité de moyens de fixation 8 dont la fonction est de permettre une solidarisation du dispositif de conditionnement thermique 1 sur le véhicule. Par exemple, le moyen de fixation 8 est formé par une patte issue de matière avec le boîtier de conditionnement thermique 3 et au travers de laquelle est ménagé un trou.

Préférentiellement, le boîtier de conditionnement thermique 3 est agencé pour être monté sur le véhicule dans la position représentée sur la figure 1, c'est-à-dire dans une position dans laquelle le groupe moto-ventilateur 2 est positionné en partie supérieure du dispositif de conditionnement thermique 1 sur la direction verticale. Selon cette configuration, la partie inférieure du dispositif de conditionnement thermique 1 est formée par une interface 9. En particulier, l'interface 9 permet de définir un espace dans lequel est assurée une connexion entre l'échangeur de chaleur 20 et une boucle de circulation d'un fluide caloporteur ou réfrigérant traversant l'échangeur de chaleur 20.

Une telle interface 9 comprend un bord de fixation 10 et au moins un logement 11 apte à recevoir, par exemple, un organe de détente du fluide réfrigérant, quand l'échangeur de chaleur 20 est un évaporateur, ou une vanne de contrôle de débit du fluide caloporteur, quand l'échangeur de chaleur 20 est un radiateur de chauffage.

Dans l'exemple de réalisation, le boîtier de conditionnement thermique 3 est formé par deux demi boîtiers 12 et 13 joints l'un à l'autre au niveau d'une ligne d'assemblage pourvue de moyens d'assemblage des deux demi boîtiers 12 et 13 entre eux. Il s'agit, ici, d'un exemple de réalisation non limitatif du boîtier de conditionnement thermique 3 selon la présente invention.

Avantageusement, le boîtier de conditionnement thermique 3 comprend une première conformation 16, de forme complémentaire à une section de l'échangeur de chaleur 20, configurée pour recevoir une extrémité de l'échangeur de chaleur 20. Le boîtier de conditionnement thermique 3 comprend également une deuxième conformation 17, préférentiellement formée de manière unitaire avec le boîtier de conditionnement thermique 3, ou de manière séparée, configurée pour former un couvercle recouvrant au moins un tube dans lequel circule le fluide caloporteur ou réfrigérant circulant dans l'échangeur de chaleur 20. Préférentiellement, une telle deuxième conformation 17 s'étend depuis le logement 11 jusqu'à une partie supérieure de la première conformation 16.

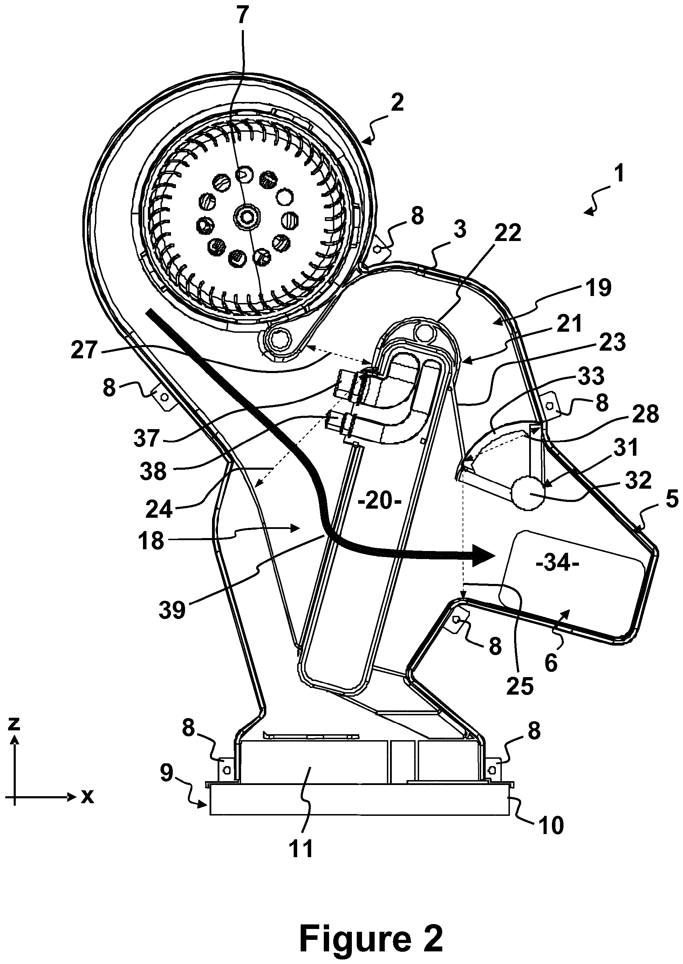

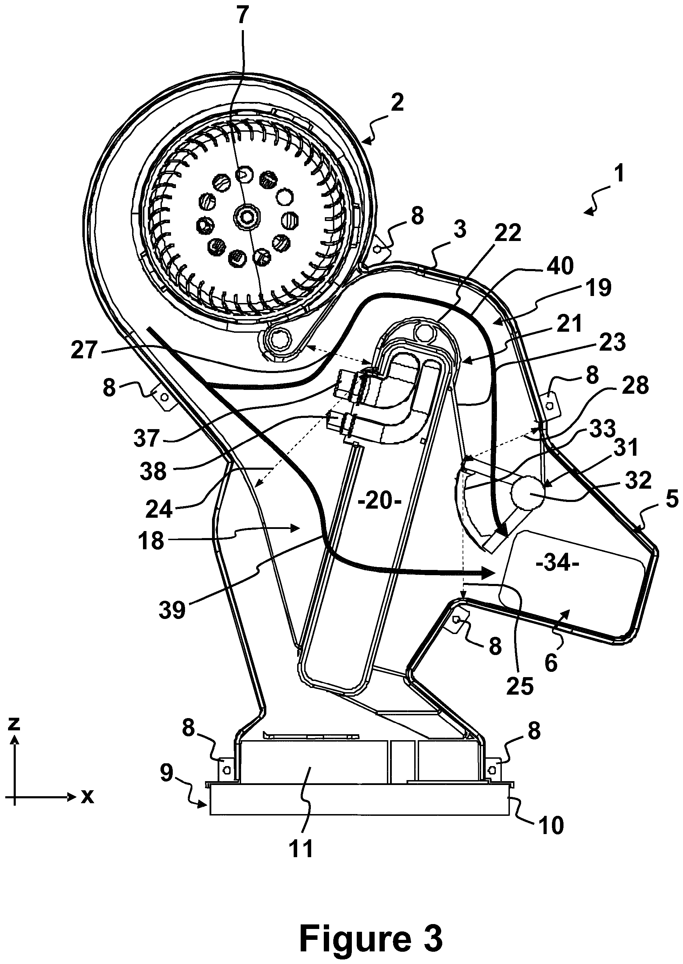

On se reporte dorénavant aux figures 2 et 3 qui sont, respectivement, une vue en coupe de coté du dispositif de conditionnement thermique 1 selon la présente invention dans lequel un moyen de contrôle 31 est dans une première position et dans une deuxième position.

Les figures 2 et 3 montrent le volume interne du boîtier de conditionnement thermique 3, l'un des demi boîtiers ayant été ôté de manière à mieux distinguer la structure interne du dispositif de conditionnement thermique 1.

Les figures 2 et 3 illustrent la circulation des flux d'air dans le boîtier de conditionnement thermique 3, notamment un flux d'air principal 39 circulant dans un canal de circulation d'air 18 dans lequel est agencé l'échangeur de chaleur 20, et un flux d'air secondaire 40 circulant dans un conduit de circulation d'air 19, contournant l'échangeur de chaleur 20.

Le boîtier de conditionnement thermique 3 délimite donc le canal de circulation d'air 18 et le conduit de circulation d'air 19. On notera que le boîtier de conditionnement thermique 3 peut être agencé de sorte que la circulation des flux d'air dans le dispositif de conditionnement thermique 1 soient constitués uniquement par le canal de circulation d'air 18 et le conduit de circulation d'air 19, aucun autre conduit parcouru par le flux d'air n'étant prévu dans le boîtier de conditionnement thermique 3.

Tel que défini précédemment, le canal de circulation d'air 18 se distingue du conduit de circulation d'air 19 en ce qu'il loge l'échangeur de chaleur 20, le conduit de circulation d'air 19 étant dépourvu de moyen de traitement thermique apte à modifier la température du flux d'air y circulant. Du point de vue des flux d'air, le canal de circulation d'air 18 et le conduit de circulation d'air 19 sont agencés en parallèle. C'est en ce sens qu'il est considéré que le conduit de circulation d'air 19 contourne l'échangeur de chaleur 20.

L'échangeur de chaleur 20 est intégralement logé dans le canal de circulation d'air 18. Le fluide réfrigérant, dans le cas d'un évaporateur, ou le fluide caloporteur, dans le cas d'un radiateur de chauffage, arrive dans l'échangeur de chaleur par un premier tube 37 et en sort par un deuxième tube 38, représentés de manière partielle sur les figures 2 et 3.

Le boîtier de conditionnement thermique 3 comprend une paroi interne 21 séparant le canal de circulation d'air 18 et le conduit de circulation d'air 19. La paroi interne 21 empêche un mélange des flux d'air circulant respectivement dans le canal de circulation d'air 18 et le conduit de circulation d'air 19.

La paroi interne 21 comprend une portion de réception 22 d'une extrémité, notamment une extrémité supérieure, de l'échangeur de chaleur 20. La paroi interne 21 comprend également une portion de séparation 23 entre le canal de circulation d'air 18 et le conduit de circulation d'air 19. La portion de séparation 23 de la paroi interne 21 prolonge la portion de réception 22 de la paroi interne 21, en aval de cette dernière. La portion de séparation 23 comporte une première section joignant la portion de réception 22 de la paroi interne 21 et une deuxième section formant une extrémité libre.

Le canal de circulation d'air 18 comprend un orifice d'entrée 24 et un orifice de sortie 25. L'orifice de sortie 25 est agencé en aval de l'orifice d'entrée 24. L'échangeur de chaleur 20 est disposé dans le canal de circulation d'air 18 entre l'orifice d'entrée 24 et l'orifice de sortie 25.

Le conduit de circulation d'air 19 comprend une bouche d'entrée 27 et une bouche de sortie 28. La bouche de sortie 28 est agencé en aval de la bouche d'entrée 27. Particulièrement, la bouche de sortie 28 est agencée au niveau de l'extrémité libre de la portion de séparation 23.

La circulation du flux d'air dans le conduit de circulation d'air 19 est placée sous la dépendance du moyen de contrôle 31. Le moyen de contrôle 31 est mobile autour d'un axe de rotation 32. Le moyen de contrôle 31 est ainsi en mesure de prendre plusieurs positions, notamment une première position illustrée sur la figure 2, particulièrement une première position extrême, dans laquelle il ferme la bouche de sortie 28 du conduit de circulation d'air 19. Pour ce faire, le moyen de contrôle 31 est pourvu d'un flasque 33 formant un moyen de fermeture du conduit de circulation d'air 19, un tel flasque 33 s'étendant au droit de la bouche de sortie 28.

Dans une telle situation, l'orifice de sortie 25 du canal de circulation d'air 18 est intégralement ouvert, puisque le moyen de contrôle 31 ne s'étend pas à travers l'orifice de sortie 25. Le flux d'air circulant dans le canal de circulation d'air 18 peut subir un échange thermique avec l'échangeur de chaleur 20 et rejoindre librement une chambre de mélange 34, agencée en aval du canal de circulation d'air 18 et du conduit de circulation d'air 19, avant de sortir du dispositif de conditionnement thermique 1 par la première sortie d'air 5 et/ou la deuxième sortie d'air 6.

Selon un exemple de réalisation, le moyen de contrôle 31 est un volet tambour. Il s'agit d'un volet comprenant au moins deux flancs, ou au moins deux bras, disposés entre l'axe de rotation 32 et le flasque 33. Plus particulièrement, quand le moyen de contrôle 31 est un volet tambour, le flasque 33 est une section en forme d'une portion de cylindre, avantageusement centré sur l'axe de rotation 32. Un tel volet tambour est reconnaissable par le fait qu'il est agencé pour autoriser une circulation du flux d'air entre le flasque 33 et l'axe de rotation 32, en particulier lorsqu'il est placé dans une position distincte de la première position. Un tel volet tambour est agencé dans le boîtier de conditionnement thermique 3 de manière à ce que le flasque 33 se déplace le long de l'extrémité libre de la portion de séparation 23, lorsqu'il est en mouvement.

Bien entendu, le moyen de contrôle 31 peut prendre d'autres formes. Par exemple, le moyen de contrôle 31 peut être formé par un volet drapeau dont l'axe de rotation 32 est disposé contre l'extrémité libre de la portion de séparation 23, et qui présente un flasque 33 formé par une section plane prenant naissance sur l'axe de rotation 32.

Sur la figure 2, le moyen de contrôle 31 est disposé en aval du canal de circulation d'air 18 et du conduit de circulation d'air 19, c'est-à-dire en sortie de ces derniers.

La figure 3 illustre le dispositif de conditionnement thermique 1 selon la présente invention, dans lequel le moyen de contrôle 31 est dans une deuxième position, distincte de la première position.

Selon la figure 3, la position du moyen de contrôle 31 est une deuxième position extrême, correspondant une position extrême opposée à la première position extrême.

Le moyen de contrôle 31 est ainsi en butée, par exemple contre l'extrémité libre de la paroi interne 23. Le flasque 33 s'étend alors dans le prolongement de la paroi interne 23 de manière à générer une perte de charge à l'égard du flux d'air circulant dans le canal de circulation d'air 18, tout en libérant intégralement la bouche de sortie 28 du conduit de circulation d'air 19.

En pratique, la perte de charge est générée par le placement du moyen de contrôle 31 de manière à fermer partiellement l'orifice de sortie 25 du canal de circulation d'air 18. Le flasque 33 du moyen de contrôle 31 vient ainsi fermer partiellement le canal de circulation d'air 18, autorisant le passage du flux d'air sur une section réduite, illustrée sur la figure 3.

La génération de pertes de charge est ainsi modifiable par le déplacement en rotation du moyen de contrôle 31. Le flasque 33 ferme l'orifice de sortie 25 du canal de circulation d'air 18, ce qui permet d'augmenter le débit de flux d'air dans le conduit de circulation d'air 19.

En tout état de cause, le moyen de contrôle 31 réduit la section de passage au niveau de l'orifice de sortie 25, mais il ne bloque pas intégralement le passage du flux d'air, en laissant ouverte au moins une section réduite, lorsque le moyen de contrôle 31 est dans la deuxième position extrême, telle qu'illustrée à la figure 3.

Quand le moyen de contrôle 31 est dans une position différente de la première position telle qu'illustrée à la figure 2, il ouvre au moins partiellement la bouche de sortie 28, de manière à autoriser une circulation du flux d'air dans le conduit de circulation d'air 19.

Le flux d'air au niveau de la bouche de sortie 28 du conduit de circulation d'air 19 peut circuler en totalité entre le flasque 33 et l'axe de rotation 32, lorsque le moyen de contrôle 31 est un volet tambour.

Selon un mode alternatif de réalisation, l'axe de rotation 32 est éloigné de l'enveloppe externe délimitant le volume interne du dispositif de conditionnement thermique 1, de manière à autoriser un passage du flux d'air, provenant du conduit de circulation d'air 19, entre l'axe de rotation 32 et l'enveloppe externe, tout en autorisant également une circulation du flux d'air entre l'axe de rotation 32 et le flasque 33 du moyen de contrôle 31.

Le flux d'air circulant dans le canal de circulation d'air 18 et le flux d'air circulant dans le conduit de circulation d'air 19 se rejoignent dans la chambre de mélange 34.

Le flux d'air circulant dans le conduit de circulation d'air 19 est à une température ambiante, c'est-à-dire équivalente à la température de l'habitacle, alors que le flux d'air circulant dans le canal de circulation d'air 18 subit un traitement thermique. La quantité du flux d'air traité thermiquement est réduite au profit du flux d'air à température ambiante passant par le conduit de circulation d'air 19, ce qui permet de tempérer la température du flux d'air résultant, formé par un mélange du flux d'air circulant dans le canal de circulation d'air 18 et du flux d'air circulant dans le conduit de circulation d'air 19.

Ainsi, selon la présente invention, la fonction d'adoucissement thermique peut ainsi être opérée, sans toutefois générer de pertes de charge quand la puissance maximum est demandée sur l'échangeur de chaleur 20, c'est-à-dire quand le moyen de contrôle 31 est dans la première position extrême.

De manière avantageuse, le dispositif de conditionnement thermique 1 détaillé ci-dessus est destiné à être installé dans une zone arrière du véhicule. Il peut ainsi être combiné à une installation de chauffage, ventilation, et/ou climatisation, non représentée, distincte du dispositif de conditionnement thermique 1 selon la présente invention.

Néanmoins, la combinaison du dispositif de conditionnement thermique 1 selon la présente invention et de l'installation de chauffage, ventilation, et/ou climatisation forme un système de conditionnement thermique d'un habitacle de véhicule automobile. Dans un tel cas, l'installation de chauffage, ventilation, et/ou climatisation est agencée pour gérer le traitement aérothermique d'une zone avant de l'habitacle du véhicule, alors que le dispositif de conditionnement thermique 1 selon la présente invention est configuré pour ventiler et/ou traiter thermiquement une zone arrière du véhicule. La zone avant du véhicule peut être séparée de la zone arrière du véhicule par une rangée de sièges avant, ou alternativement par une rangée intermédiaire de sièges, quand le véhicule est équipé de plus de deux rangées de sièges, comme c'est le cas des véhicules de type "monospace" par exemple.

En complément, le moyen de contrôle 31 est susceptible de prendre une série de positions intermédiaires, c'est-à-dire toutes positions comprises entre la première position extrême, illustrée à la figure 2, et la deuxième position extrême, illustrée à la figure 3.

Alternativement, le moyen de contrôle 31 peut être installé en amont du canal de circulation d'air 18 et du conduit de circulation d'air 19, c'est-à-dire au niveau de l'orifice d'entrée 24 et de la bouche d'entrée 27. Selon cet exemple alternatif de réalisation, le moyen de contrôle 31 est alors disposé de manière à obturer la bouche d'entrée 27, lorsqu'il est placé dans la première position, et à générer une perte de charge sur le flux d'air circulant dans le canal de circulation d'air 18, lorsqu'il est dans la deuxième position.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention, telle que définie par les revendications, et notamment toutes combinaisons des différents modes de fonctionnement décrits précédemment, pouvant être pris séparément ou en association.

## Revendications

1. Dispositif de conditionnement thermique (1) comprenant un boîtier de conditionnement thermique (3) délimitant un canal de circulation d'air (18), comprenant un orifice d'entrée (24) et un orifice de sortie (25), et un conduit de circulation d'air (19) dans lesquels un flux d'air est apte à circuler, au moins un échangeur de chaleur (20) logé dans le canal de circulation d'air (18) et le conduit de circulation d'air (19) contournant l'échangeur de chaleur (20), la circulation du flux d'air dans le conduit de circulation d'air (19) étant placée sous la dépendance d'au moins un moyen de contrôle (31) apte à prendre au moins deux positions distinctes,
dans une première position extrême, le moyen de contrôle (31) fermant le conduit de circulation d'air (19) et, dans une deuxième position extrême, opposée à la première position extrême, le moyen de contrôle (31) ouvrant intégralement le conduit de circulation d'air (19) et fermant au moins partiellement le canal de circulation d'air (18),
**caractérisé en ce que** lorsque le moyen de contrôle (31) est dans la deuxième position extrême, il réduit la section de passage au niveau de l'orifice de sortie (25), mais ne bloque pas intégralement le passage du flux d'air, en laissant ouverte au moins une section réduite.

2. Dispositif de conditionnement thermique selon la revendication 1, dans lequel le moyen de contrôle (31) est installé dans le boîtier de conditionnement thermique (3) en aval et/ou en amont de l'échangeur de chaleur (20).

3. Dispositif de conditionnement thermique selon les revendications 1 ou 2, dans lequel, dans la deuxième position, le moyen de contrôle (31) ouvre intégralement le conduit de circulation d'air (19).

4. Dispositif de conditionnement thermique selon l'une quelconque des revendications précédentes, dans lequel une paroi interne (23) sépare le canal de circulation d'air (18) et conduit de circulation d'air (19).

5. Dispositif de conditionnement thermique selon l'une quelconque des revendications 1 à 4, dans lequel le moyen de contrôle (31) est un volet tambour.

6. Dispositif de conditionnement thermique selon la revendication 5, dans lequel le moyen de contrôle (31) est agencé dans le boîtier de conditionnement thermique (3) de manière à se déplacer le long d'une extrémité libre de la paroi interne (23).

7. Dispositif de conditionnement thermique selon l'une quelconque des revendications 1 à 4, dans lequel le moyen de contrôle (31) est un volet drapeau.

8. Dispositif de conditionnement thermique selon la revendication 7, dans lequel le moyen de contrôle (31) est agencé dans le boîtier de conditionnement thermique (3) de telle sorte qu'un axe de rotation du moyen de contrôle (31) est positionné à une extrémité de la paroi interne (23).

9. Dispositif de conditionnement thermique selon l'une quelconque des revendications précédentes, dans lequel l'échangeur de chaleur (20) est un évaporateur.

10. Système de conditionnement thermique d'un habitacle de véhicule automobile, comprenant une installation de chauffage, ventilation et/ou climatisation et un dispositif de conditionnement thermique (1) selon l'une quelconque des revendications précédentes, le dispositif de conditionnement thermique (1) étant distinct de l'installation de ventilation, chauffage et/ou climatisation.

11. Système selon la revendication 10, dans lequel l'installation de chauffage, ventilation et/ou climatisation est configurée pour être installée dans une zone avant du véhicule, alors que le dispositif de conditionnement thermique (1) est agencé pour être installé dans une zone arrière du véhicule.

## Patentansprüche

1. Vorrichtung zur thermischen Konditionierung (1), die ein Gehäuse zur thermischen Konditionierung (3) enthält, das einen eine Eingangsöffnung (24) und eine Ausgangsöffnung (25) enthaltenden Luftzirkulationskanal (18) und eine Luftzirkulationsleitung (19) begrenzt, in denen ein Luftstrom zirkulieren kann, wobei mindestens ein Wärmetauscher (20) im Luftzirkulationskanal (18) untergebracht ist und die Luftzirkulationsleitung (19) um den Wärmetauscher (20) herumführt, wobei die Zirkulation des Luftstroms in der Luftzirkulationsleitung (19) von mindestens einer Steuereinrichtung (31) abhängt, die mindestens zwei unterschiedliche Stellungen einnehmen kann,
wobei die Steuereinrichtung (31) in einer ersten Endstellung die Luftzirkulationsleitung (19) schließt, und in einer zweiten Endstellung entgegengesetzt zur ersten Endstellung die Steuereinrichtung (31) die Luftzirkulationsleitung (19) vollständig öffnet und den Luftzirkulationskanal (18) zumindest teilweise schließt,
**dadurch gekennzeichnet, dass**, wenn die Steuereinrichtung (31) in der zweiten Endstellung ist, sie den Durchlassquerschnitt im Bereich der Ausgangsöffnung (25) reduziert, den Durchlass des Luftstroms aber nicht vollständig blockiert, indem sie mindestens einen reduzierten Querschnitt offen lässt.

2. Vorrichtung zur thermischen Konditionierung nach Anspruch 1, wobei die Steuereinrichtung (31) im Gehäuse zur thermischen Konditionierung (3) hinter und/oder vor dem Wärmetauscher (20) eingebaut ist.

3. Vorrichtung zur thermischen Konditionierung nach den Ansprüchen 1 oder 2, wobei die Steuereinrichtung (31) in der zweiten Stellung die Luftzirkulationsleitung (19) vollständig öffnet.

4. Vorrichtung zur thermischen Konditionierung nach einem der vorhergehenden Ansprüche, wobei eine Innenwand (23) den Luftzirkulationskanal (18) und die Luftzirkulationsleitung (19) trennt.

5. Vorrichtung zur thermischen Konditionierung nach einem der Ansprüche 1 bis 4, wobei die Steuereinrichtung (31) eine Trommelklappe ist.

6. Vorrichtung zur thermischen Konditionierung nach Anspruch 5, wobei die Steuereinrichtung (31) im Gehäuse zur thermischen Konditionierung (3) so angeordnet ist, dass sie sich entlang eines freien Endes der Innenwand (23) verschiebt.

7. Vorrichtung zur thermischen Konditionierung nach einem der Ansprüche 1 bis 4, wobei die Steuereinrichtung (31) eine Fahnenklappe ist.

8. Vorrichtung zur thermischen Konditionierung nach Anspruch 7, wobei die Steuereinrichtung (31) im Gehäuse zur thermischen Konditionierung (3) so angeordnet ist, dass eine Drehachse der Steuereinrichtung (31) an einem Ende der Innenwand (23) positioniert ist.

9. Vorrichtung zur thermischen Konditionierung nach einem der vorhergehenden Ansprüche, wobei der Wärmetauscher (20) ein Verdampfer ist.

10. System zur thermischen Konditionierung eines Fahrzeuginnenraums, das eine Heiz-, Lüftungs- und/oder Klimatisierungsanlage und eine Vorrichtung zur thermischen Konditionierung (1) nach einem der vorhergehenden Ansprüche enthält, wobei die Vorrichtung zur thermischen Konditionierung (1) sich von der Lüftungs-, Heiz- und/oder Klimatisierungsanlage unterscheidet.

11. System nach Anspruch 10, wobei die Heiz-, Lüftungs- und/oder Klimatisierungsanlage konfiguriert ist, um in einem vorderen Bereich des Fahrzeugs eingebaut zu werden, während die Vorrichtung zur thermischen Konditionierung (1) eingerichtet ist, um in einem hinteren Bereich des Fahrzeugs eingebaut zu werden.

## Claims

1. Thermal conditioning device (1) comprising a thermal conditioning housing (3) delimiting an air circulation duct (18), comprising an inlet orifice (24) and an outlet orifice (25), and an air circulation canal (19) in both of which an air flow is able to circulate, at least one heat exchanger (20) housed in the air circulation duct (18) and the air circulation canal (19) bypassing the heat exchanger (20), the circulation of the air flow in the air circulation canal (19) being placed under the dependency of at least one control means (31) able to adopt at least two distinct positions,
in a first extreme position, the control means (31) closing the air circulation canal (19), and in a second extreme position, the opposite to the first extreme position, the control means (31) opening the air circulation canal (19) fully and at least partially closing the air circulation duct (18),
**characterized in that** when the control means (31) is in the second extreme position, it reduces the passage cross section at the outlet orifice (25) but does not fully block the passage of the air flow, leaving at least a reduced cross section open.

2. Thermal conditioning device according to Claim 1, in which the control means (31) is installed in the thermal conditioning housing (3) downstream and/or upstream of the heat exchanger (20).

3. Thermal conditioning device according to Claims 1 or 2, in which, in the second position, the control means (31) fully opens the air circulation canal (19).

4. Thermal conditioning device according to any one of the preceding claims, in which an internal wall (23) separates the air circulation duct (18) from the air circulation canal (19).

5. Thermal conditioning device according to any one of Claims 1 to 4, in which the control means (31) is a revolving shutter.

6. Thermal conditioning device according to Claim 5, in which the control means (31) is arranged in the thermal conditioning housing (3) in such a way as to move along a free end of the internal wall (23) .

7. Thermal conditioning device according to any one of Claims 1 to 4, in which the control means (31) is a flap-like shutter.

8. Thermal conditioning device according to Claim 7, in which the control means (31) is arranged in the thermal conditioning housing (3) in such a way that an axis of rotation of the control means (31) is positioned at one end of the internal wall (23) .

9. Thermal conditioning device according to any one of the preceding claims, in which the heat exchanger (20) is an evaporator.

10. System for the thermal conditioning of a motor vehicle interior, comprising a heating, ventilation and/or air-conditioning installation and a thermal conditioning device (1) according to any one of the preceding claims, the thermal conditioning device (1) being distinct from the heating, ventilation and/or air-conditioning installation.

11. System according to Claim 10, in which the heating, ventilation and/or air-conditioning installation is configured to be installed in a front zone of the vehicle, whereas the thermal conditioning device (1) is designed to be installed in a rear zone of the vehicle.
